# FASCICULE DE BREVET EUROPEEN

(11) **EP 1 058 187 B1**
(45) Date de publication et mention de la délivrance du brevet: **12.08.2009**
(21) Numéro de dépôt: 00201944.6
(22) Date de dépôt: 02.06.2000
(51) Int. Cl.: G06F 9/445, G06F 11/14

(54) **Procédé de téléchargement d'un programme dans un équipement**
Verfahren zur Fernladung eines Programmes in ein Gerät
Method of downloading a program into equipment

(30) Priorité: 03.06.1999 FR 9906993
(43) Date de publication de la demande: 06.12.2000
(73) Titulaire: SAGEM COMMUNICATIONS SAS, 75015 Paris (FR)
(72) Inventeur: Galach, Philippe, 75013 Paris (FR)
(74) Mandataire: Fruchard, Guy

(56) Documents cités:
- US-A- 5 694 538
- US-A- 5 701 492

## Description

La présente invention concerne un procédé de téléchargement d'un programme dans un équipement tel qu'un ensemble de communication radio ou une terminaison numérique de réseau.

Un équipement de ce type comprend un processeur mettant en oeuvre un programme d'exploitation contenu dans une mémoire permanente de l'équipement. La mémoire permanente généralement utilisée est une mémoire flash inscriptible et effaçable électriquement qui présente des temps d'accès rapides compatibles avec le fonctionnement du processeur, ce qui permet l'exécution du programme d'exploitation directement à partir de cette mémoire. Le programme d'exploitation est mis à jour par téléchargement dans la mémoire flash de l'équipement d'une nouvelle version de ce programme. Toutefois, les caractéristiques des mémoires flash empêchent l'écriture dans une zone de la mémoire flash si une autre zone de cette mémoire est en cours de lecture de sorte que le téléchargement de la nouvelle version du programme dans l'équipement provoque nécessairement une interruption du fonctionnement de cet équipement.

Pour remédier à cet inconvénient, on a réalisé des équipements comprenant deux mémoires flash, une première mémoire flash destinée à contenir le programme d'exploitation en cours d'exécution et une seconde mémoire flash destinée à contenir la nouvelle version de ce programme. Il est alors possible de télécharger la deuxième version du programme dans la seconde mémoire flash pendant l'exécution de la première version du programme à partir de la première mémoire flash puis, après téléchargement, de basculer sur la seconde mémoire flash pour exécuter la deuxième version du programme à partir de la mémoire flash correspondante. Ceci présente en outre l'avantage de conserver en mémoire la première version du programme de sorte qu'en cas d'anomalie de la version qui vient d'être chargée, la version précédente de celui-ci peut être exécutée. Cependant, l'équipement ainsi réalisé est relativement coûteux du fait de la présence des deux mémoires flash.

Il est également connu du document US-A-5 701 492 de réaliser un système comprenant une mémoire flash comprenant deux parties pouvant être effacées de façon indépendante et destinées à contenir deux versions d'un programme exécutable dans une mémoire vive. Il n'est pas envisagé dans ce document de charger une version tandis que l'autre version est en cours d'exécution.

Un but de la présente invention est de proposer un procédé de téléchargement d'une deuxième version d'un programme dans un équipement simple et peu coûteux et tout en assurant une poursuite du fonctionnement de cet équipement.

En vue de la réalisation de ce but, le procédé selon l'invention est défini par la revendication 1.

Ainsi, la partie exécutable de la première version du programme est mémorisée temporairement dans la mémoire vive de l'équipement et est exécutée à partir de celle-ci. L'exécution de cette version ne nécessite donc pas de lecture de la mémoire permanente de type mémoire flash et la deuxième version du programme peut être chargée dans cette mémoire permanente pendant l'exécution de la première version. Ce procédé peut de la sorte être mis en oeuvre sur un équipement comprenant seulement une mémoire permanente de type mémoire flash à deux zones inscriptibles et effaçables indépendamment l'une de l'autre et une mémoire vive. Le coût de cet équipement est donc inférieur à un équipement à deux mémoires permanentes de type mémoire flash.

D'autres caractéristiques et avantages de l'invention ressortiront à la lecture de la description qui suit d'un mode de mie en oeuvre particulier non limitatif de l'invention.

Il sera fait référence aux dessins annexés, parmi lesquels :
- la figure 1 est une vue schématique de l'équipement mettant en oeuvre le procédé selon l'invention,
- la figure 2 est un diagramme par bloc de ce procédé.

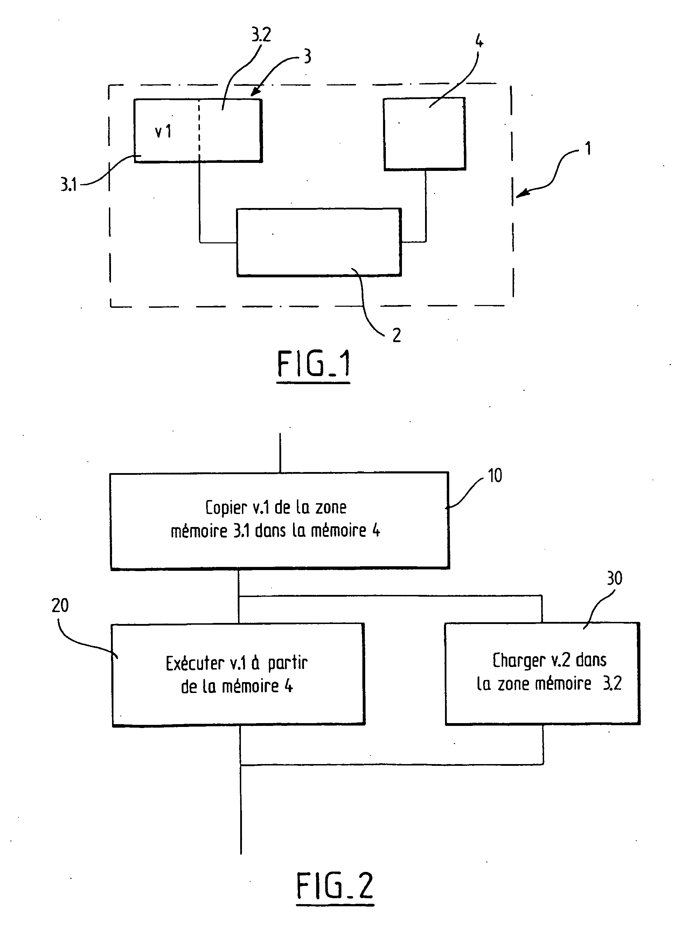

En référence à la figure 1, le procédé conforme à l'invention est destiné à être mis en oeuvre dans un équipement 1 comprenant un processeur 2 associé d'une part à une mémoire permanente 3 de type mémoire flash et d'autre part à une mémoire vive 4.

La mémoire permanente 3 est divisée en deux zones 3.1 et 3.2 inscriptibles et effaçables indépendamment l'une de l'autre.

Le procédé selon l'invention permet le téléchargement dans l'équipement 1 d'une deuxième version v.2 d'un programme lors d'une exécution d'une première version v.1 de ce programme par le processeur 2 de l'équipement 1.

En référence également à la figure 2, la version v.1 du programme étant initialement contenue dans la zone 3.1 de la mémoire permanente 3, le procédé débute par l'étape 10 consistant à copier une partie exécutable de la version v.1 du programme dans la mémoire vive 4.

Le processeur 2 exécute ensuite la partie exécutable de la version v.1 à partir de la mémoire vive 4 lors d'une étape 20.

Pendant l'exécution 20, la version v.2 du programme est téléchargée dans la zone 3.2 de la mémoire 3 (étape 30). Le téléchargement 30 est effectué par l'intermédiaire d'un réseau, tel qu'un réseau numérique, non représenté, auquel l'équipement est raccordé.

Le téléchargement 30 comprend une phase d'effacement de la zone 3.2 de la mémoire 3 et une phase d'inscription de la version v.2 du programme dans la zone 3.2 de la mémoire permanente 3.

Par la suite, le processeur 2 arrête l'exécution de la partie exécutable de la version v.1 pour débuter l'exécution de la partie exécutable de la version v.2 à partir de la zone 3.2 de la mémoire permanente 3.

Dans l'hypothèse où l'exécution de la version v.2 est interrompue accidentellement, on prévoit en outre selon l'invention un procédé de sécurité de relance permettant d'éviter de déplacer un opérateur sur le site. Ce procédé consiste à effectuer des relances successives à chaque interruption accidentelle. Toutefois afin d'éviter de relancer indéfiniment un programme présentant une défaillance majeure, par exemple une anomalie de programmation de la nouvelle version ou un défaut lors du téléchargement, le nombre de relances est décompté et est limité par un seuil de répétitions correspondant à un nombre prédéterminé de relances pendant un premier temps prédéterminé, par exemple six relances pendant une période de temps de dix secondes. Si pendant cette période de temps une septième interruption intervient, la version en cours est mise hors service et un lancement est effectué sur l'autre version, c'est-à-dire dans l'exemple décrit un retour à la version v.1. Si au contraire aucun nouveau lancement n'est effectué pendant le premier temps prédéterminé, c'est-à-dire si le fonctionnement est satisfaisant pendant plus de dix secondes dans l'exemple décrit, le décompte des relances est remis à zéro et n'est repris selon le même procédé qu'à l'occasion d'une interruption accidentelle ultérieure ou un téléchargement d'une nouvelle version.

Dans le cas d'un retour à une version antérieure le procédé de sécurité est repris comme décrit ci-dessus. Si le seuil de répétitions est dépassé avec cette autre version, elle est également mise hors service. Dans le cas de deux versions du programme comme indiqué, il n'existe donc plus aucune version en service. Pour éviter de déplacer un opérateur inutilement dans le cas où la mise hors service des deux versions du programme est due à des causes extérieures à celles-ci, par exemple des perturbations liées à la mise en route d'un groupe électrogène, la procédure de lancement est reprise sur la dernière version activée après un second temps prédéterminé suffisamment long pour permettre une stabilisation du système, par exemple trente secondes. Ce nouveau lancement peut lui-même être effectué selon le procédé de sécurité décrit ci-dessus.

Dans l'hypothèse où la version v.2 bien que fonctionnant correctement doive être mise à jour, le procédé précédemment décrit serait à nouveau mis en oeuvre. La partie exécutable de la version v.2 serait alors copiée dans la mémoire vive 4 puis exécutée à partir de celle-ci par le processeur 2 tandis qu'une nouvelle version du programme serait chargée dans la zone 3.1 de la mémoire permanente 3 à la place de la version v.1.

Bien entendu, l'invention n'est pas limitée au mode de réalisation décrit et on peut y apporter des variantes de réalisation sans sortir du cadre de l'invention tel que défini par les revendications.

En particulier on peut utiliser une mémoire flash divisée en plus de deux zones, les différentes zones pouvant être chargées avec des programmes différents pouvant être successivement téléchargés en utilisant à chaque fois le procédé selon l'invention pour poursuivre l'exécution de la version en cours du programme dont on souhaite assurer le téléchargement d'une nouvelle version.

## Revendications

1. Procédé de téléchargement d'une deuxième version (v.2) d'un programme dans un équipement (1) contenant déjà une première version (v.1) du programme, le procédé comprenant les étapes de :
- copier (10) une partie exécutable de la première version (v.1) du programme d'une première zone (3.1) d'une mémoire permanente de type mémoire flash (3) de l'équipement vers une mémoire.vive (4) de l'équipement,
- exécuter (20) la partie exécutable de la première version (v.1) du programme à partir de la mémoire vive (4), **caractérisé en ce qu'**il comprend en outre l'étape de charger simultanément la deuxième version (v.2) du programme dans une deuxième zone (3.2) de la mémoire permanente de type mémoire flash (3), **en ce qu'**après téléchargement de la deuxième version, l'exécution de celle-ci est lancée, **en ce qu'**en cas d'interruption accidentelle le lancement est répété en effectuant un décompte jusqu'à un seuil de répétitions correspondant à un nombre prédéterminé de relances pendant un premier temps prédéterminé, **en ce qu'**en cas de dépassement du seuil de répétitions la seconde version est mise hors service et la première version est remise en service, et **en ce qu'**en cas de fonctionnement satisfaisant au-delà du premier temps prédéterminé le décompte des relances est remis à zéro.

2. Procédé selon la revendication 1, **caractérisé en ce qu'**en cas d'interruption accidentelle du lancement de la première version le lancement de la première version du programme est répété jusqu'au seuil de répétitions, **en ce qu'**en cas de dépassement du seuil de répétitions la première version est mise hors service, et **en ce qu'**en cas de fonctionnement satisfaisant au-delà du premier temps prédéterminé, le décompte des relances est remis à zéro.

3. Procédé selon la revendication 2, **caractérisé en ce qu'**après une mise hors service des deux versions pendant un second temps prédéterminé, une nouvelle tentative de lancement est effectuée sur la dernière version activée.

## Claims

1. A method of downloading a second version (v.2) of a program into equipment (1) already containing a first version (v.1) of the program, the method comprising the steps of:
• copying (10) an executable portion of the first version (v.1) of the program from a first zone (3.1) of a first non-volatile memory of flash memory type (3) of the equipment to a volatile memory (4) of the equipment; and
• executing (20) of the executable portion of the first version (v.1) of the program from the volatile memory (4),
the method being **characterized in that** it further comprises the step of simultaneously loading the second version (v.2) of the program into a second zone (3.2) of the non-volatile memory of the flash type (3), **in that** after downloading the second version, execution thereof is launched, **in that** in the event of an accidental interruption launching is repeated while counting up to a repetition threshold corresponding to a predetermined number of relaunches during a first predetermined time, **in that** in the event of the repetition threshold being exceeded, the second version is taken out of service and the first version is put back into service, and **in that** in the event of satisfactory operation beyond the first predetermined time, the relaunch count is reset to zero.

2. A method according to claim 1, **characterized in that** in the event of an accidental interruption of the launching of the first version, the launching of the first version of the program is repeated up to a repetition threshold, **in that** in the event of the repetition threshold being exceeded, the first version is taken out of service, and **in that** in the event of satisfactory operation beyond the first predetermined number, the relaunch count is reset to zero.

3. A method according to claim 2, **characterized in that** after both versions have been taken out of service for a second predetermined time, a new launch attempt is performed on the last-activated version.

## Patentansprüche

1. Verfahren zur Fernladung einer zweiten Version (v.2) eines Programms in ein Gerät (1), das bereits eine erste Version (v.1) des Programms enthält, wobei das Verfahren die Schritte umfasst:
- Kopieren (10) eines ausführbaren Teils der ersten Version (v.1) des Programms von einem ersten Bereich (3.1) eines Festwertspeichers vom Typ Flash-Speicher (3) des Geräts in einen Schreib-Lese-Speicher (4) des Geräts,
- Ausführen (20) des ausführbaren Teils der ersten Version (v.1) des Programms aus dem Schreib-Lese-Speicher (4) heraus, **dadurch gekennzeichnet, dass** es ferner den Schritt des gleichzeitigen Ladens der zweiten Version (v.2) des Programms in einen zweiten Bereich (3.2) des Festwertspeichers vom Typ Flash-Speicher (3) umfasst, dass nach dem Fernladen der zweiten Version deren Ausführen gestartet wird, dass im Falle eines zufälligen Abbruchs das Starten wiederholt wird, während ein Zählen bis zu einem Wiederholungsgrenzwert erfolgt, der einer vorgegebenen Anzahl von Neustarts während einer ersten vorgegebenen Zeitspanne entspricht, dass im Falle eines Überschreitens des Wiederholungsgrenzwertes die zweite Version außer Betrieb gesetzt und die erste Version wieder in Betrieb genommen wird, und dass im Falle einer zufriedenstellenden Funktionsweise über die erste vorgegebene Zeitspanne hinaus der Zählwert der Neustarts auf Null zurückgesetzt wird.

2. Verfahren nach Anspruch 1, **dadurch gekennzeichnet, dass** im Falle eines zufälligen Abbruchs des Startens der ersten Version das Starten der ersten Version bis zum Wiederholungsgrenzwert wiederholt wird, dass im Falle eines Überschreitens des Wiederholungsgrenzwertes die erste Version außer Betrieb gesetzt wird, und dass im Falle einer zufriedenstellenden Funktionsweise über die vorgegebene erste Zeitspanne hinaus der Zählwert der Neustarts auf Null zurückgesetzt wird.

3. Verfahren nach Anspruch 2, **dadurch gekennzeichnet, dass**, nachdem die beiden Versionen eine zweite vorgegebene Zeitspanne lang außer Betrieb gesetzt wurden, ein neuer Startversuch mit der letzten aktivierten Version erfolgt.
